# EUROPEAN PATENT APPLICATION

(11) **EP 4 707 283 A1**
(43) Date of publication of application: **11.03.2026**
(21) Application number: 24818430.1
(22) Date of filing: 09.05.2024
(51) Int. Cl.: C07F 9/50, C08F 4/80, C08F 10/00

(54) **TETRAHYDRONAPHTHOL-PHOSPHINE PRE-TRANSITION METAL COMPLEX, AND PREPARATION METHOD THEREFOR AND USE THEREOF**

(30) Priority: 05.06.2023 CN 202310659028
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: ZHANG, Randi, Beijing 100013 (CN); GOU, Qingqiang, Beijing 100013 (CN); GAO, Rong, Beijing 100013 (CN); LAI, Jingjing, Beijing 100013 (CN); WANG, Ying, Beijing 100013 (CN); AN, Jingyan, Beijing 100013 (CN)
(74) Representative: Hoffmann Eitle
(86) International application number: PCT/CN2024/091929
(87) International publication number: WO 2024/250897

(57) **Abstract**

The present invention relates to the technical field of olefin polymerization catalysts. Disclosed are a tetrahydronaphthol-phosphine pre-transition metal complex, and a preparation method therefor and a use thereof. The structural formula of the tetrahydronaphthol-phosphine pre-transition metal complex is shown as formula (I), wherein M is selected from group IVB metals; Ar is selected from substituted or unsubstituted C6-C20 aryl groups; X is selected from halogen or C1-C10 hydrocarbyl groups, and n is 1 or 2. When the tetrahydronaphthol-phosphine pre-transition metal complex of the present invention is used as a main catalyst of an olefin polymerization catalyst, good olefin polymerization activity (homopolymerization/copolymerization activity) is achieved at a relatively high temperature, and the prepared olefin polymer has good performance.

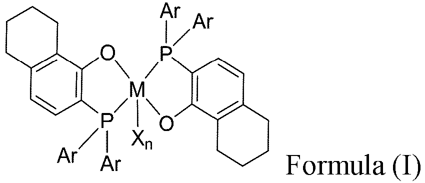

## Description

### CROSS-REFERENCE TO RELATED APPLICATIONS

The application claims the benefit of the China patent application No. "202310659028.5", filed on June 5, 2023, the content of which is specifically and entirely incorporated herein by reference.

### TECHNICAL FIELD

The present invention relates to the technical field of olefin polymerization catalysts, in particular to a tetrahydronaphthol-phosphine pre-transition metal complex, and a preparation method therefor and a use thereof.

### BACKGROUND ART

Polyethylene materials have the characteristics such as good chemical resistance, low price, simple preparation process, low density, and desirable mechanical properties, the materials can also be used as the potential substitute materials for rubber. In addition, the use properties of the materials can be greatly improved and the development directions of the materials can be extended by incorporating polar functional groups into the polyolefins composed of saturated carbon chains. Therefore, it is extremely urgent to develop the polyolefin products with a high value-added and high performance.

Metal complexes are currently the most commonly used olefin polymerization catalysts, mainly comprise two categories of the homogeneous catalysts and the heterogeneous catalysts. Among various types of olefin polymerization catalysts, the homogeneous pre-transition metal catalysts have advantages such as high polymerization activity, the obtained polymer has a high molecular weight, can perform the active polymerization, and have controllability, thus the metal complexes have attracted attentions from the researchers and scholars (for example, refer to Angewandte Chemie International Edition 2020, 59, pp. 14726-147; Chemistry Bulletin, 2014, 77, pp. 951-960). By varying the steric hindrance effects, electronic effects and the number of metal centers in the vicinity of the active centers, the purposes of regulating and controlling the polymerization activity, polymerization products and product distribution can be achieved. However, China has been relatively lagging in the production of high-end polyolefins, wherein the lack of olefin polymerization catalysts with desirable properties is a major factor limiting development of the field. Currently, the existing ethylene gas phase polymerization process generally requires a polymerization temperature of 85°C or higher, and the ethylene solution polymerization process usually requires a polymerization temperature within the range of 130-250°C. However, the existing olefin polymerization catalysts have the defect that the high catalytic activity and high polymerization performance cannot be maintained at high temperature.

### SUMMARY OF THE INVENTION

The present invention aims to overcome the defect in the prior art that the olefin polymerization catalyst cannot maintain high catalytic activity and high polymerization performance at high temperature, and provides a tetrahydronaphthol-phosphine pre-transition metal complex and a preparation method therefor and a use thereof. The tetrahydronaphthol-phosphine pre-transition metal complex has good thermal stability, when the tetrahydronaphthol-phosphine pre-transition metal complex of the present invention is used as the main catalyst of the olefin polymerization catalyst during the olefin polymerization reaction process, the tetrahydronaphthol-phosphine pre-transition metal complex exhibits desirable olefin polymerization activity at higher temperature, and the prepared olefin polymer has superior properties (e.g., relatively high molecular weight and narrower molecular weight distribution).

In order to achieve the above objects, the first aspect of the present invention provides a tetrahydronaphthol-phosphine pre-transition metal complex, the structural formula of the tetrahydronaphthol-phosphine pre-transition metal complex is shown as formula (I), 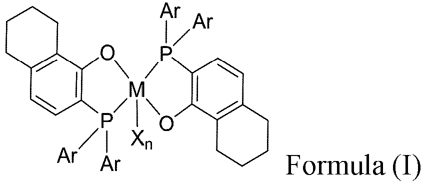 wherein M is selected from group IVB metals; Ar is selected from substituted or unsubstituted C6-C20 aryl groups; X is selected from halogen or C1-C10 hydrocarbyl groups, and n is 1 or 2.

Preferably, the structural formula of the tetrahydronaphthol-phosphine pre-transition metal complex is shown as formula (II), 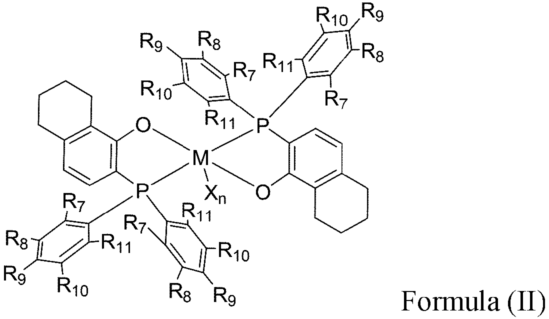 wherein R₇-R₁₁ are each independently selected from hydrogen, halogen, hydroxyl groups, and substituted or unsubstituted C1-C20 hydrocarbyl groups.

The second aspect of the present invention provides a method for preparing the tetrahydronaphthol-phosphine pre-transition metal complex, the method comprises the following steps:
(1) Reacting a compound represented by formula (III) with a compound represented by formula (IV) to generate a ligand;
(2) Mixing the ligand with a hydrogen-extracting agent and carrying out the reaction, then removing the hydrogen-extracting agent, and subjecting the obtained product to the reaction with an M metal compound;

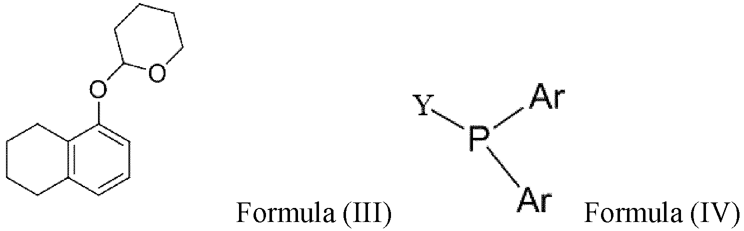

Wherein Ar in the formula (IV) is selected from the substituted or unsubstituted C6-C20 aryl groups, and Y is halogen;
The metal M in the M metal compound is selected from group IVB metals.

The third aspect of the present invention provides an olefin polymerization catalyst comprising a main catalyst and a co-catalyst, wherein the main catalyst is the tetrahydronaphthol-phosphine pre-transition metal complex provided by the invention.

The fourth aspect of the present invention provides an olefin polymerization method, the method comprises carrying out the olefin polymerization reaction in the presence of said olefin polymerization catalyst provided by the invention.

Due to the technical scheme of the invention, when the tetrahydronaphthol-phosphine pre-transition metal complex of the invention is used as a main catalyst of an olefin polymerization catalyst during the olefin polymerization reaction process, the good olefin polymerization activity (homopolymerization/copolymerization activity) is achieved at a relatively high temperature, and the prepared olefin polymer has good performance (e.g., relatively high molecular weight and narrower molecular weight distribution).

### DESCRIPTION OF THE PREFERRED EMBODIMENT

The specific embodiments of the invention will be described in detail below. It should be understood that the specific embodiments described herein merely serve to explain and illustrate the invention, instead of imposing limitations thereto.

The structural formula of the tetrahydronaphthol-phosphine pre-transition metal complex according to the invention is shown as formula (I),

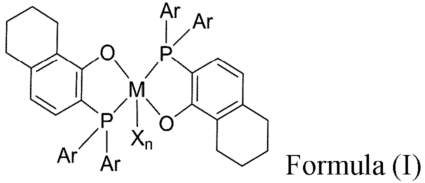

Wherein M is selected from group IVB metals; Ar is selected from substituted or unsubstituted C6-C20 aryl groups; X is selected from halogen or C1-C10 hydrocarbyl groups, and n is 1 or 2.

In a case of preferably, Ar is substituted or unsubstituted C6-C15 aryl group, and more preferably substituted or unsubstituted C6-C8 aryl group.

In a more preferred embodiment, the structural formula of the tetrahydronaphthol-phosphine pre-transition metal complex is shown as formula (II),

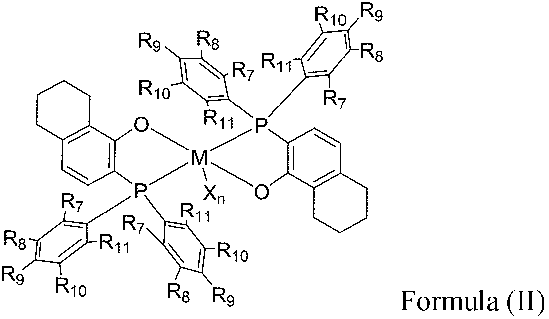

Wherein R₇-R₁₁ are each independently selected from hydrogen, halogen, hydroxyl groups, and substituted or unsubstituted C1-C20 hydrocarbyl groups.

In the complexes represented by formulae (I) and (II), M is preferably Ti, Zr or Hf.

In the complexes represented by formulae (I) and (II), X is preferably halogen or C1-C8 hydrocarbyl group (e.g., C1-C6 alkyl).

In a complex represented by formula (II), in a case of preferably, R₇-R₁₁ are each independently selected from hydrogen, halogen, hydroxyl groups, substituted or unsubstituted C1-C10 hydrocarbyl groups, and substituted or unsubstituted C6-C15 aryl groups.

In the complexes represented by formulae (I) and (II), n is 1 or 2, and n represents the number of X groups connected to the metal M.

In the invention, the expression "substituted" in the term "substituted or unsubstituted" means that a substituent is contained, wherein the substituent may be selected from the group consisting of halogen, hydroxyl, C1-C6 alkyl, halogenated C1-C6 alkyl, C1-C6 alkoxy, and halogenated C1-C6 alkoxy.

In the invention, the alkyl group (e.g., C1-C6 alkyl, C1-C10 alkyl) may be selected from methyl, ethyl, n-propyl, isopropyl, n-butyl, isobutyl, n-pentyl, isopentyl, n-hexyl, isohexyl or 3,3-dimethylbutyl.

In the invention, the alkoxy group (e.g., C1-C6 alkoxy group) may be selected from methoxy, ethoxy, n-propoxy, isopropoxy, n-butoxy, isobutoxy, n-pentoxy, isopentoxy, n-hexoxy, isohexoxy or 3,3-dimethyl butoxy.

In the invention, the aryl group (e.g., C6-C10 aryl or C6-C15 aryl) may be selected from phenyl, 4-methylphenyl, 4-ethylphenyl, dimethylphenyl or vinylphenyl.

In the invention, the halogen is selected from fluorine, chlorine, bromine or iodine.

In a further preferred embodiment, the tetrahydronaphthol-phosphine pre-transition metal complex is selected from the group consisting of the following complexes:
Complex 1: a complex represented by formula (II), wherein M is Ti, R₇-R₁₁ are each H, X is Cl, and n=1;
Complex 2: a complex represented by formula (II), wherein M is Ti, R₇-R₁₁ are each H, X is Cl, and n=2;
Complex 3: a complex represented by formula (II), wherein M is Ti, R₇-R₁₁ are each H, X is methyl, and n=2;
Complex 4: a complex represented by formula (II), wherein M is Ti, R₇-R₁₁ are each H, X is -CH₂C₆H₅, and n=2;
Complex 5: a complex represented by formula (II), wherein M is Ti, R₈-R₁₁ are each H, R₇ is methoxy, X is Cl, n=1;
Complex 6: a complex represented by formula (II), wherein M is Ti, R₈-R₁₁ are each H, R₇ is methoxy, X is Cl, n=2;
Complex 7: a complex represented by formula (II), wherein M is Ti, R₈-R₁₁ are each H, R₇ is methoxy, X is methyl, n=2;
Complex 8: a complex represented by formula (II), wherein M is Ti, R₈-R₁₁ are each H, R₇ is methoxy, X is -CH₂C₆H₅, and n=2;
Complex 9: a complex represented by formula (II), wherein M is Ti, R₇, R₈, R₁₀ and R₁₁ are each H, R₉ is methoxy, X is Cl, n=1;
Complex 10: a complex represented by formula (II), wherein M is Ti, R₇, R₈, R₁₀ and R₁₁ are each H, R₉ is methoxy, X is Cl, n=2;
Complex 11: a complex represented by formula (II), wherein M is Ti, R₇, R₈, R₁₀ and R₁₁ are each H, R₉ is methoxy, X is methyl, n=2;
Complex 12: a complex represented by formula (II), wherein M is Ti, R₇, R₈, R₁₀ and R₁₁ are each H, R₉ is methoxy, X is -CH₂C₆H₅, n=2;
Complex 13: a complex represented by formula (II), wherein M is Ti, R₇, R₉ and R₁₁ are each H, R₈ and R₁₀ are each -CF₃, X is Cl, n=1;
Compound 14: a complex represented by formula (II), wherein M is Ti, R₇, R₉ and R₁₁ are each H, R₈ and R₁₀ are each -CF₃, X is Cl, n=2;
Complex 15: a complex represented by formula (II), wherein M is Ti, R₇, R₉ and R₁₁ are each H, R₈ and R₁₀ are each -CF₃, X is methyl, n=2;
Compound 16: a complex represented by formula (II), wherein M is Ti, R₇, R₉ and R₁₁ are each H, R₈ and R₁₀ are each -CF₃, X is -CH₂C₆H₅, n=2;
Complex 17: a complex represented by formula (II), wherein M is Ti, R₇, R₉ and R₁₁ are each H, R₈ and R₁₀ are each methyl, X is Cl, n=1;
Complex 18: a complex represented by formula (II), wherein M is Ti, R₇, R₉ and R₁₁ are each H, R₈ and R₁₀ are each methyl, X is Cl, n=2;
Complex 19: a complex represented by formula (II), wherein M is Ti, R₇, R₉ and R₁₁ are each H, R₈ and R₁₀ are each methyl, X is methyl, n=2;
Complex 20: a complex represented by formula (II), wherein M is Ti, R₇, R₉ and R₁₁ are each H, R₈ and R₁₀ are each methyl, X is -CH₂C₆H₅, n=2;
Complex 21: a complex represented by formula (II), wherein M is Zr, R₇-R₁₁ are each H, X is Cl, and n=2;
Complex 22: a complex represented by formula (II), wherein M is Zr, R₇-R₁₁ are each H, X is methyl, n=2;
Complex 23: a complex represented by formula (II), wherein M is Zr, R₇-R₁₁ are each H, X is -CH₂C₆H₅, and n=2;
Complex 24: a complex represented by formula (II), wherein M is Zr, R₈-R₁₁ are each H, R₇ is methoxy, X is Cl, and n=2;
Complex 25: a complex represented by formula (II), wherein M is Zr, R₈-R₁₁ are each H, R₇ is methoxy, X is methyl, n=2;
Complex 26: a complex represented by formula (II), wherein M is Zr, R₈-R₁₁ are each H, R₇ is methoxy, X is -CH₂C₆H₅, and n=2;
Complex 27: a complex represented by formula (II), wherein M is Zr, R₇, R₈, R₁₀ and R₁₁ are each H, R₉ is methoxy, X is Cl, n=2;
Compound 28: a complex represented by formula (II), wherein M is Zr, R₇, R₈, R₁₀ and R₁₁ are each H, R₉ is methoxy, X is methyl, n=2;
Complex 29: a complex represented by formula (II), wherein M is Zr, R₇, R₈, R₁₀ and R₁₁ are each H, R₉ is methoxy, X is -CH₂C₆H₅, n=2;
Complex 30: a complex represented by formula (II), wherein M is Zr, R₇, R₉ and R₁₁ are each H, R₈ and R₁₀ are each -CF₃, X is Cl, n=2;
Compound 31: a complex represented by formula (II), wherein M is Zr, R₇, R₉ and R₁₁ are each H, R₈ and R₁₀ are each -CF₃, X is methyl, n=2;
Complex 32: a complex represented by formula (II), wherein M is Zr, R₇, R₉ and R₁₁ are each H, R₈ and R₁₀ are each -CF₃, X is -CH₂C₆H₅, n=2;
Complex 33: a complex represented by formula (II), wherein M is Zr, R₇, R₉ and R₁₁ are each H, R₈ and R₁₀ are each methyl, X is Cl, n=2;
Complex 34: a complex represented by formula (II), wherein M is Zr, R₇, R₉ and R₁₁ are each H, R₈ and R₁₀ are each methyl, X is methyl, n=2;
Complex 35: a complex represented by formula (II), wherein M is Zr, R₇, R₉ and R₁₁ are each H, R₈ and R₁₀ are each methyl, X is -CH₂C₆H₅, n=2;
Complex 36: a complex represented by formula (II), wherein M is Hf, R₇-R₁₁ are each H, X is Cl, and n=2;
Complex 37: a complex represented by formula (II), wherein M is Hf, R₇-R₁₁ are each H, X is methyl, and n=2;
Complex 38: a complex represented by formula (II), wherein M is Hf, R₇-R₁₁ are each H, X is -CH₂C₆H₅, and n=2;
Complex 39: a complex represented by formula (II), wherein M is Hf, R₈-R₁₁ are each H, R₇ is methoxy, X is Cl, and n=2;
Complex 40: a complex represented by formula (II), wherein M is Hf, R₈-R₁₁ are each H, R₇ is methoxy, X is methyl, n=2;
Complex 41: a complex represented by formula (II), wherein M is Hf, R₈-R₁₁ are each H, R₇ is methoxy, X is -CH₂C₆H₅, and n=2;
Complex 42: a complex represented by formula (II), wherein M is Hf, R₇, R₈, R₁₀ and R₁₁ are each H, R₉ is methoxy, X is Cl, n=2;
Complex 43: a complex represented by formula (II), wherein M is Hf, R₇, R₈, R₁₀ and R₁₁ are each H, R₉ is methoxy, X is methyl, n=2;
Complex 44: a complex represented by formula (II), wherein M is Hf, R₇, R₈, R₁₀ and R₁₁ are each H, R₉ is methoxy, X is -CH₂C₆H₅, n=2;
Complex 45: a complex represented by formula (II), wherein M is Hf, R₇, R₉ and R₁₁ are H, R₈ and R₁₀ are each -CF₃, X is Cl, n=2;
Complex 46: a complex represented by formula (II), wherein M is Hf, R₇, R₉ and R₁₁ are H, R₈ and R₁₀ are each -CF₃, X is methyl, n=2;
Complex 47: a complex represented by formula (II), wherein M is Hf, R₇, R₉ and R₁₁ are H, R₈ and R₁₀ are each -CF₃, X is -CH₂C₆H₅, and n=2;
Complex 48: a complex represented by formula (II), wherein M is Hf, R₇, R₉ and R₁₁ are H, R₈ and R₁₀ are each methyl, X is Cl, n=2;
Complex 49: a complex represented by formula (II), wherein M is Hf, R₇, R₉ and R₁₁ are H, R₈ and R₁₀ are each methyl, X is methyl, n=2;
Compound 50: a complex represented by formula (II), wherein M is Hf, R₇, R₉ and R₁₁ are H, R₈ and R₁₀ are each methyl, X is -CH₂C₆H₅, and n=2.

The method for preparing the tetrahydronaphthol-phosphine pre-transition metal complex of the invention may comprise the following steps:
(1) Reacting a compound represented by formula (III) with a compound represented by formula (IV) to generate a ligand;
(2) Mixing the ligand with a hydrogen-extracting agent and carrying out the reaction, then removing the hydrogen-extracting agent, and subjecting the obtained product to the reaction with an M metal compound;

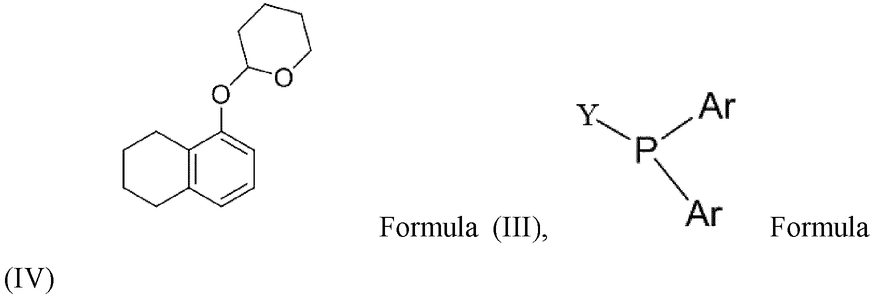

Ar in formula (IV) is selected from the substituted or unsubstituted C6-C20 aryl groups, preferably the substituted or unsubstituted C6-C15 aryl groups, and more preferably the substituted or unsubstituted C6-C8 aryl groups.

Y in formula (IV) is halogen, the specific example may be chlorine or bromine, most preferably chlorine.

In the method of the present invention, the metal M in the M metal compound is selected from group IVB metals, preferably Ti, Zr or Hf.

In the method of the present invention, the specific reaction process is shown in the following reaction formula:

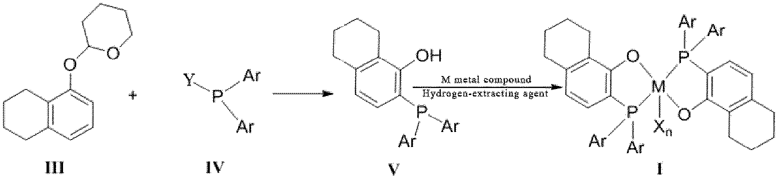

Wherein Ar, Y, M, X and n are as defined in the preceding text.

In a more preferred embodiment, the reaction process of step (1) is shown in the following reaction formula:

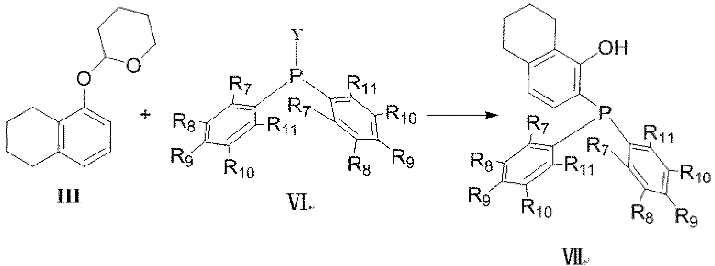

Wherein Y and R₇-R₁₁ are as defined in the preceding text.

In a more preferred embodiment, the reaction process of step (2) is shown in the following reaction formula:

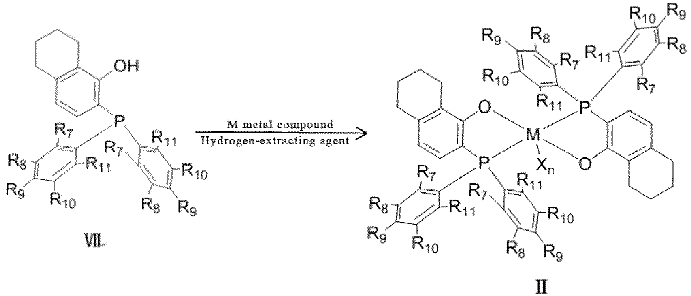

Wherein R₇-R₁₁, M, X and n are as defined in the preceding text.

In a preferred embodiment, the M metal compound is at least one selected from the group consisting of titanium tetrachloride, bis(tetrahydrofuran)titanium tetrachloride (TiCl₄(THF)₂), tri(tetrahydrofuran)titanium trichloride, zirconium tetrachloride, bis(tetrahydrofuran)zirconium tetrachloride ((THF)₂ZrCl₄), hafnium tetrachloride and bis(tetrahydrofuran)hafnium tetrachloride ((THF)₂HfCl₄).

In the invention, "THF" refers to "tetrahydrofuran".

In a preferred embodiment, in the reaction process of step (1), the compound represented by formula (III) is initially mixed with a first hydrogen-extracting agent for carrying out the reaction, and then reacted with the compound represented by formula (IV).

In the method of the present invention, the reaction of step (2) is carried out in the presence of a reaction solvent. According to some embodiments of the invention, the reaction solvent may be toluene or tetrahydrofuran, preferably tetrahydrofuran.

In the method of the invention, the first hydrogen-extracting agent used in step (1) and the hydrogen-extracting agent (also referred to as a second hydrogen-extracting agent) used in step (2) may be the same or different, the first hydrogen-extracting agent and the second hydrogen-extracting agent are each independently one or more selected from the group consisting of NaH, KH, n-butyl lithium and methyl lithium.

In a specific embodiment, the preparation process of step (1) comprises the following steps: dissolving a compound represented by formula (III) in anhydrous ether in an atmosphere of protective gas (e.g., nitrogen gas), dropwise adding a first hydrogen extracting agent (n-butyl lithium) solution at the temperature of -78°C, and gradually returning the reaction temperature to room temperature; subsequently, dropwise adding a tetrahydrofuran solution (ice-water bath) of the phosphine compound represented by formula (IV) into the original reaction system, gradually raising the temperature to room temperature, stirring the materials and carrying out the reaction overnight; quenching with water, extracting the organic phase with ether, concentrating the obtained organic phase, freezing for cyclic deoxygenation, adding 5mL concentrated hydrochloric acid under a nitrogen gas atmosphere for carrying out the reaction, tracking the completion of the reaction by using a thin layer chromatography (TLC), then adding an aqueous NaHCO₃ solution for neutralization, quenching with water, extracting the organic phase with ether, drying with anhydrous MgSO₄, filtering, concentrating, and performing a column chromatography to obtain a ligand represented by formula (V).

In a specific embodiment, the preparation process of step (2) comprises the following steps: dissolving the ligand obtained in step (1) in an organic solvent (e.g., toluene, tetrahydrofuran) in an atmosphere of protective gas (e.g., nitrogen gas), adding an excessive amount of a second hydrogen-extracting agent (e.g., NaH, KH), stirring at room temperature, filtering to remove the hydrogen-extracting agent, then dissolving an M metal compound in an organic solvent (e.g., toluene, tetrahydrofuran), dropwise adding the mixture into the original reaction system, carrying out the reaction overnight, completely draining the solvent, adding dichloromethane for dissolving, then filtering to remove a filter cake, concentrating the filtrate, adding heptane for carrying out the recrystallization, thereby preparing the tetrahydronaphthyridine pre-transition metal complex of the invention.

The invention also provides an olefin polymerization catalyst comprising a main catalyst and a co-catalyst, wherein the main catalyst is the tetrahydronaphthol-phosphine pre-transition metal complex provided by the invention.

In the invention, the co-catalyst may be an organo-aluminum compound and/or an organo-boron compound.

In a preferred embodiment, the organo-aluminum compound is at least one of alkylaluminoxane and an organo-aluminum compound represented by the general formula AlLₙZ₃₋ₙ, wherein L is selected from hydrogen, C1-C20 hydrocarbyl groups and C1-C20 alkoxy, Z is selected from halogen, 0<n≤3, and n is an integer.

In a more preferred embodiment, L is selected from the group consisting of C1-C20 hydrocarbyl groups, C1-C20 alkoxy, C7-C20 aralkyl, and C6-C20 aryl groups.

In a more preferred embodiment, Z is selected from chlorine or bromine.

Further preferably, the organo-aluminum compound is one or more selected from the group consisting of trimethylaluminum, triethylaluminum, triisobutylaluminum, tri-n-hexylaluminum, trioctylaluminum, diethylaluminum monohydrogen, diisobutylaluminum monohydrogen, diethylaluminum monochloride, diisobutylaluminum monochloride, ethylaluminum sesquichloride, ethylaluminum dichloride, methylaluminoxane (MAO) and modified methylaluminoxane (MMAO).

In a preferred embodiment, the organo-boron compound is aryl boron and/or organo-borate.

In a more preferred embodiment, the aryl boron is substituted or unsubstituted phenyl boron. As an example, the aryl boron is tri(pentafluorophenyl) boron.

In a more preferred embodiment, the organo-borate is N,N-dimethyl phenylammonium tetrakis(pentafluorophenyl) borate and/or triphenylmethyl tetrakis(pentafluorophenyl) borate.

In a preferred embodiment, when the co-catalyst is an organo-aluminum compound, the molar ratio of aluminum in the co-catalyst to the metal M in the main catalyst is (10-10⁷): 1, preferably (10-100,000) : 1, more preferably (100-10,000) : 1; specifically, the molar ratio may be 10:1, 20:1, 50:1, 100:1, 200:1, 300:1, 500:1, 700:1, 800:1, 1,000:1, 2,000:1, 3,000:1, 5,000:1, 10,000:1, 100,000:1, 1,000,000:1, 10,000,000:1, or a random value within the range consisting of any two of the numerical values.

In a preferred embodiment, when the co-catalyst is an organo-boron compound, the molar ratio of boron in the co-catalyst to the metal M in the main catalyst is (0.1-1,000) : 1, preferably (0.1-500) : 1; specifically, the molar ratio may be 0.1:1, 0.2:1, 0.5:1, 1:1, 2:1, 3:1, 5:1, 8:1, 10:1, 20:1, 50:1, 100:1, 200:1, 300:1, 500:1, 700:1, 800:1, 1,000:1, or a random value within the range consisting of any two of the numerical values.

In the invention, the olefin may be C2-C16 olefin.

In the invention, the olefin may be at least one of ethylene, α-olefin and cycloolefin.

In a preferred embodiment, the olefin is ethylene, and/or α-olefin having 3-16 carbon atoms.

The invention also provides an olefin polymerization method, the method comprises carrying out the olefin polymerization reaction in the presence of said olefin polymerization catalyst in the invention.

In the olefin polymerization method of the invention, the temperature of the olefin polymerization reaction may be from -78°C to 200°C, more preferably from -20°C to 150°C. Given that the main catalyst of the olefin polymerization catalyst is a tetrahydronaphthol-phosphine pre-transition metal complex in the invention, the olefin polymerization method of the invention is particularly suitable for the olefin polymerization reaction at high temperature. In some embodiments, the olefin polymerization reaction temperature is within the range of 80-100°C.

In the olefin polymerization method of the invention, the polymerization pressure of the olefin polymerization reaction may be within the range of 0.01-10MPa, preferably within the range of 0.01-5MPa.

In the olefin polymerization method of the invention, the polymerization reaction time of the olefin polymerization reaction may be within the range of 5-60 min.

In the invention, the olefin polymerization reaction may be homopolymerization or copolymerization.

In the invention, "polymerization pressure" refers to the pressure of ethylene in the polymerization system, it is expressed by the absolute pressure.

In the olefin polymerization method of the invention, the olefin is C2-C16 olefin.

According to an embodiment of the invention, the olefin is ethylene.

According to an embodiment of the present invention, the olefin is at least one of ethylene, propylene, α-olefin, and cycloolefin.

According to some embodiments of the invention, the olefin polymerization reaction is performed by the olefin monomers in a solvent, the solvent for polymerization is one or more selected from the group consisting of alkanes, aromatic hydrocarbons, and halogenated hydrocarbons.

According to some embodiments of the invention, the polymerization solvent is one or more selected from the group consisting of hexane, pentane, heptane, benzene, toluene, dichloromethane, chloroform, chlorobenzene and dichloroethane, preferably one or more selected from the group consisting of hexane, toluene and heptane.

According to some embodiments of the present invention, the process of using tetrahydronaphthol-phosphine pre-transition metal complex as a main catalyst of the olefin polymerization catalyst for catalyzing homopolymerization of ethylene is as follows: subjecting ethylene and an olefin polymerization catalyst to a high-pressure solution polymerization reaction in an inert solvent, and after the completion of said reaction, precipitating the polymer by using a precipitant, and then filtering and drying the polymer.

In a preferred embodiment, the inert solvent is at least one of toluene, xylene, and decalin; the precipitant is at least one of methanol, ethanol and acetone.

In the invention, the process of using tetrahydronaphthol-phosphine pre-transition metal complex as a main catalyst of the olefin polymerization catalyst for catalyzing homopolymerization of ethylene has excellent stability of homopolymerization activity, the highest homopolymerization activity can reach 5.6×10⁷ g/(mol·h), and can still reach 10⁶ g/(mol·h) under the polymerization condition of 80°C.

According to some embodiments of the invention, the specific reaction process of using the tetrahydronaphthol-phosphine pre-transition metal complex as a main catalyst of the olefin polymerization catalyst for catalyzing the direct coordination copolymerization of ethylene and comonomers (α-olefin and/or cycloolefin) is as follows: subjecting ethylene, comonomers and olefin polymerization catalyst to the solution polymerization reaction in an inert solvent, after completion of the reaction, precipitating the polymer by using a precipitant, subsequently filtering and drying the polymer.

In a preferred embodiment, the inert solvent is at least one of toluene, xylene and decalin; the precipitant is methanol, ethanol or acetone.

In the invention, the activity of using the tetrahydronaphthol-phosphine pre-transition metal complex as a main catalyst of the olefin polymerization catalyst for catalyzing the direct coordination copolymerization of ethylene and comonomers (α-olefin and/or cycloolefin) can reach 1.56×10⁶ g/(mol·h) at most, and the comonomer has the high insertion rate and molecular weight.

In a specific embodiment, the comonomer is long chain α-olefin and norbornene.

In a preferred embodiment, the molar ratio of the comonomer to the olefin polymerization catalyst is (0-1,000) : 1; specifically, it may be 100:1, 200:1, 300:1, 400:1, 500:1, 600:1, 700:1, 800:1, 900:1, or 1,000: 1.

In the olefin polymerization method of the invention, the used amount of the olefin polymerization catalyst is 5-30µmol, the specific examples may be 5µmol, 10µmol, 15µmol, 20µmol, 25µmol or 30µmol.

In the invention, alkyl refers to straight chain alkyl, branched chain alkyl or cycloalkyl, including but not limited to: methyl, ethyl, n-propyl, isopropyl, n-butyl, sec-butyl, isobutyl, tert-butyl, n-pentyl, isopentyl, tert-pentyl, neopentyl, n-hexyl, n-heptyl, n-octyl, n-decyl, cyclopropyl, cyclopentyl, cyclohexyl, 4-methyl cyclohexyl, 4-ethyl cyclohexyl, 4-n-propyl cyclohexyl and 4-n-butyl cyclohexyl.

In the invention, alkenyl refers to straight chain alkenyl, branched chain alkenyl or cycloalkenyl, including but not limited to: vinyl, allyl, butenyl.

In the invention, the examples of the aralkyl group include but are not limited to: phenylmethyl, phenylethyl, phenyl-n-propyl, phenyl-isopropyl, phenyl-n-butyl and phenyl-tert-butyl.

In the invention, the examples of alkaryl include but are not limited to: tolyl, ethylphenyl, n-propyl phenyl, isopropyl phenyl, n-butyl phenyl and tert-butyl phenyl.

The tetrahydronaphthol-phosphine pre-transition metal complex, and a preparation method therefor and a use thereof according to the invention are further illustrated with reference to examples. The examples are carried out under the premise of the technical scheme of the invention, and give the detailed embodiments and specific operational process, but the protection scopes of the invention are not limited to the following examples.

Unless otherwise specified in the invention, the experimental methods in the following examples were conventional methods in the art. Unless otherwise specified in the invention, the experimental materials used in the following examples were commercially available.

The analytical characterization instruments and test methods used in the following examples and comparative examples were as follows:
(1) Nuclear magnetic resonance spectrometer: Avance III HD 500 (500 MHz), with Tetramethylsilicon (TMS) as an internal standard;
(2) Molecular weight and molecular weight distribution PDI (PDI = M_{w}/Mₙ) of polymers: the indicators were measured by using PL-GPC220 chromatograph with a solvent trichlorobenzene at 150°C (wherein the standard sample was PS, the flow rate was 1.0mL/min, the chromatographic column was 3×PLgel 10µm M1×ED-B, 300 ×7.5nm);
(3) Activity measurement method: the polymers were washed with hydrochloric acid ethanol solution, and subjected to drying in vacuum to obtain the weight of polymers; the calculation method of the polymerization activity was as follows: polymers weight (g)/metal (mol) ×60/polymerization time (min);
(4) Analysis of comonomer content of polymers: the comonomer content was analyzed and tested by ¹H NMR, ¹³C NMR spectroscopy on a 400MHz Bruker Avance 400 NMR spectrometer by using a 10mm PASEX 13 probe at 120°C and dissolving the polymer sample with 1,2,4- trichlorobenzene.

### Example 1

Complex 2: a complex represented by formula (II), wherein M was Ti, R₇-R₁₁ were each H, X was Cl, and n=2.

In a nitrogen atmosphere, the compound represented by formula (III) (2.32g, 10mmol) was dissolved in anhydrous ether (20mL), n-butyllithium solution (2.7M, 4.0mL, 11mmol) was dropwise added at -78°C, the reaction temperature was gradually returned to room temperature, continuously stirred for 12h, a white precipitate was obtained; diphenylphosphine chloride (PPh₂Cl) (11mmol, 2.42g) was uniformly dispersed in 10mL of ether, dropwise added into the original reaction system in an ice water bath, slowly heated to room temperature, stirred overnight, quenched with water, an organic phase was extracted with ether, the obtained organic phase was concentrated, freezed for cyclic deoxygenation, 5mL of concentrated hydrochloric acid was added in the nitrogen atmosphere to carry out the reaction for 5h, the completion of reaction was tracked by TLC, an aqueous NaHCO₃ solution was subsequently added for neutralization, quenched with water, the organic phase was extracted with ether, subjected to drying with anhydrous MgSO₄, filtering, concentrating, and performing column chromatography, a ligand L₁ was obtained with a yield of 33%. ¹H NMR (500 MHz, CDCl₃, TMS): δ 11.30 (s, 1H), 7.72-7.67 (m, 4H), 7.58-7.55 (m, 2H), 7.49-7.46 (m, 4H), 6.74-6.70 (m, 1H), 6.58-6.55 (m, 1H), 2.74-2.68 (m, 4H), 1.83-1.74 (m, 4H). ¹³C NMR (126 MHz, CDCl₃) δ 161.96, 161.94, 144.03, 144.01, 132.69, 132.32, 132.30, 132.04, 131.96, 131.85, 128.65, 128.55, 128.17, 128.09, 127.01, 126.95, 119.89, 119.79, 106.84, 105.99, 77.27, 77.02, 76.76, 30.04, 22.78, 22.54, 22.48. ³¹P NMR (202 MHz, CDCl₃) δ 39.67.

The ligand L₁ (0.66g, 2mmol) was dissolved in tetrahydrofuran under a nitrogen gas atmosphere, excess NaH (0.072g, 3mmol) was added, stirred at room temperature for 10h, filtered to remove NaH, a tetrahydrofuran solution of TiCl₄(THF)₂ (0.334g, 1mmol) was dropwise added, the reaction was carried out overnight at room temperature, the solvent was extracted completely, dichloromethane (30mL) was added for dissolution, the solution was filtered to remove a filter cake, the filtrate was concentrated, heptane was added for recrystallization, a complex 2 was prepared with a yield of 77%. C₄₄H₄₀Cl₂O₂P₂Ti (781.52) was subjected to the elemental analysis and test: the theoretical calculation values were as follows: C, 67.62; H, 5.16; the test values were as follows: C, 67.43; H, 5.33.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 was added, methylaluminoxane (6.5mL, 10mmol) was then added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 2

Complex 2: a complex represented by formula (II), wherein M was Ti, R₇-R₁₁ were each H, X was Cl, and n=2.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 was added, methylaluminoxane (6.5mL, 10mmol) was then added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 3

Complex 2: a complex represented by formula (II), wherein M was Ti, R₇-R₁₁ were each H, X was Cl, and n=2;
1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 was added, methylaluminoxane (6.5mL, 10mmol) was then added, an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 4

Complex 2: a complex represented by formula (II), wherein M was Ti, R₇-R₁₁ were each H, X was Cl, and n=2;
1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 was added, methylaluminoxane (6.5mL, 10mmol) was then added, an ethylene pressure of 10atm was maintained at the temperature of 100°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 5

Complex 2: a complex represented by formula (II), wherein M was Ti, R₇-R₁₁ were each H, X was Cl, and n=2.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 and 10mL of 1-octene were added, methylaluminoxane (6.5mL, 10mmol) was then added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 6

Complex 2: a complex represented by formula (II), wherein M was Ti, R₇-R₁₁ were each H, X was Cl, and n=2.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 and 10mL of 1-octene were added, methylaluminoxane (6.5mL, 10mmol) was then added, an ethylene pressure of 10atm was maintained at the temperature of 70°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 7

Complex 2: a complex represented by formula (II), wherein M was Ti, R₇-R₁₁ were each H, X was Cl, and n=2;
1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 and 0.5g of norbornene were added, methylaluminoxane (6.5mL, 10mmol) was then added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 8

Complex 2: a complex represented by formula (II), wherein M was Ti, R₇-R₁₁ were each H, X was Cl, and n=2;
1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 and 0.5g of norbornene were added, methylaluminoxane (6.5mL, 10mmol) was then added, an ethylene pressure of 10atm was maintained at the temperature of 50°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 9

Complex 2: a complex represented by formula (II), wherein M was Ti, R₇-R₁₁ were each H, X was Cl, and n=2;
1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, 7.8mg (10µmol) of complex 2 and 0.5g of norbornene were added, methylaluminoxane (6.5mL, 10mmol) was then added, an ethylene pressure of 10atm was maintained at the temperature of 70°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 10

Complex 21: a complex represented by formula (II), wherein M is Zr, R₇-R₁₁ were each H, X was Cl, and n=2;
The ligand L1 was prepared according to the method in Example 1.

The ligand L₁ (0.66g, 2mmol) was dissolved in tetrahydrofuran under a nitrogen gas atmosphere, excess NaH (0.072g, 3mmol) was added, stirred at room temperature for 10h, filtered to remove NaH, a tetrahydrofuran solution of (THF)₂ZrCl₄ (0.38g, 1mmol) was dropwise added at the temperature of -78°C, the reaction was carried out overnight at room temperature, the solvent was extracted completely, dichloromethane (30mL) was added for dissolution, the solution was filtered to remove a filter cake, the filtrate was concentrated, heptane was added for recrystallization, a complex 21 was prepared with a yield of 71%. C₄₄H₄₀Cl₂O₂P₂Zr (824.87) was subjected to the elemental analysis and test: the theoretical calculation values were as follows: C, 64.07; H, 4.89; the test values were as follows: C, 63.79; H, 4.95.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (6.5mL, 10mmol) and 7.8mg (10µmol) of complex 21 were added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 11

Complex 36: a complex represented by formula (II), wherein M is Hf, R₇-R₁₁ were each H, X was Cl, and n=2;
The ligand L₁ was prepared according to the method in Example 1.

The ligand L₁ (0.66g, 2mmol) was dissolved in tetrahydrofuran under a nitrogen gas atmosphere, excess NaH (0.072g, 3mmol) was added, stirred at room temperature for 10h, filtered to remove NaH, a tetrahydrofuran solution of (THF)₂HfCl₄ (0.46g, 1mmol) was dropwise added at the temperature of -78°C, the reaction was carried out overnight at room temperature, the solvent was extracted completely, dichloromethane (30mL) was added for dissolution, the solution was filtered to remove a filter cake, the filtrate was concentrated, heptane was added for recrystallization, a complex 36 was prepared with a yield of 76%. C₄₄H₄₀Cl₂O₂P₂Hf (912.14) was subjected to the elemental analysis and test: the theoretical calculation values were as follows: C, 57.94; H, 4.42; the test values were as follows: C, 57.78; H, 4.31.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (6.5mL, 10mmol) and 9.1mg (10µmol) of complex 36 were added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 12

Complex 14: a complex represented by formula (II), wherein M was Ti, R₇, R₉ and R₁₁ were each H, R₈ and R₁₀ were each -CF₃, X was Cl, and n=2.

In a nitrogen atmosphere, the compound represented by formula (III) (2.32g, 10mmol) was dissolved in anhydrous ether (20mL), n-butyllithium solution (2.7M, 4.0mL, 11mmol) was dropwise added at -78°C, the reaction temperature was gradually returned to room temperature, continuously stirred for 12h, a white precipitate was obtained; bis(3,5-bis(trifluoromethyl) phenyl) chlorophosphine (PPh₂(CF₃)₄Cl) (11 mmol, 5.42g) was uniformly dispersed in 10mL of ether, dropwise added into the original reaction system in an ice water bath, slowly heated to room temperature, stirred overnight, quenched with water, an organic phase was extracted with ether, the obtained organic phase was concentrated, freezed for cyclic deoxygenation, 5mL of concentrated hydrochloric acid was added in the nitrogen atmosphere to carry out the reaction for 5h, the completion of reaction was tracked by TLC, an aqueous NaHCO₃ solution was subsequently added for neutralization, quenched with water, the organic phase was extracted with ether, subjected to drying with anhydrous MgSO₄, filtering, concentrating, and performing column chromatography, a ligand L₂ was obtained with a yield of 31%. ¹H NMR (500 MHz, CDCl₃, TMS): δ 10.48 (s, 0.9H), 8.13-8.11 (d, *J* =13.0 Hz, 6H), 6.70-6.66 (m, 2H), 2.78-2.76 (t, *J =* 5.5 Hz, 2H), 2.71-2.68 (t, *J* = 6.0 Hz, 2H), 1.84-1.79 (m, 4H). ¹³C NMR (126 MHz, CDCl₃) δ 162.14, 146.44, 135.07, 134.24, 133.39, 133.28, 133.00, 132.90, 132.73, 132.63, 132.46, 132.36, 131.80, 131.78, 131.71, 131.68, 128.33, 128.26, 126.92, 126.89, 126.86, 126.84, 126.82, 126.74, 123.64, 121.46, 121.36, 121.25, 77.28, 77.02, 76.77, 30.14, 22.75, 22.26, 22.20. ³¹P NMR (202 MHz, CDCl₃) δ 34.86.

The ligand L₂ (1.21g, 2mmol) was dissolved in tetrahydrofuran under a nitrogen gas atmosphere, excess NaH (0.072g, 3mmol) was added, stirred at room temperature for 10h, filtered to remove NaH, a tetrahydrofuran solution of TiCl₄(THF)₂ (0.334g, 1mmol) was dropwise added, the reaction was carried out overnight at room temperature, the solvent was extracted completely, dichloromethane (30mL) was added for dissolution, the solution was filtered to remove a filter cake, the filtrate was concentrated, heptane was added for recrystallization, a complex 14 was prepared with a yield of 75%. C₅₂H₃₂Cl₂F₂₄O₂P₂Ti (1325.50) was subjected to the elemental analysis and test: the theoretical calculation values were as follows: C, 47.12; H, 2.43; the test values were as follows: C, 47.01; H, 2.30.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (3.3mL, 5mmol) and 6.6mg (5µmol) of complex 14 were added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 13

Complex 30: a complex represented by formula (II), wherein M is Zr, R₇, R₉ and R₁₁ were each H, R₈ and R₁₀ were each -CF₃, X was Cl, and n=2.

The Ligand L₂ was prepared according to the method in Example 10.

The ligand L₂ (1.21g, 2mmol) was dissolved in tetrahydrofuran under a nitrogen gas atmosphere, excess NaH (0.072g, 3mmol) was added, stirred at room temperature for 10h, filtered to remove NaH, a tetrahydrofuran solution of (THF)₂ZrCl₄ (0.38g, 1mmol) was dropwise added at the temperature of -78°C, the reaction was carried out overnight at room temperature, the solvent was extracted completely, dichloromethane (30mL) was added for dissolution, the solution was filtered to remove a filter cake, the filtrate was concentrated, heptane was added for recrystallization, a complex 30 was prepared with a yield of 71%. C₅₂H₃₂Cl₂F₂₄O₂P₂Zr (1368.86) was subjected to the elemental analysis and test: the theoretical calculation values were as follows: C, 45.63; H, 2.36; the test values were as follows: C, 45.42; H, 2.30.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (3.3mL, 5mmol) and 6.8mg (5µmol) of complex 30 were added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 14

Complex 30: a complex represented by formula (II), wherein M is Zr, R₇, R₉ and R₁₁ were each H, R₈ and R₁₀ were each -CF₃, X was Cl, and n=2.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (3.3mL, 5mmol) and 6.8mg (5µmol) of complex 30 were added, an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Example 15

Complex 24: a complex represented by formula (II), wherein M is Zr, R₈-R₁₁ were each H, R₇ was methoxy, X was Cl, and n=2.

In a nitrogen atmosphere, the compound represented by formula (III) (2.32g, 10mmol) was dissolved in 20mL of anhydrous ether, n-butyllithium solution (2.7M, 4.0mL, 11mmol) was dropwise added at -78°C, the reaction temperature was gradually returned to room temperature, continuously stirred for 12h, a white precipitate was obtained; bis(4-methoxy)phosphine chloride (PPh₂(OMe)₂Cl) (11mmol, 3.08g) was uniformly dispersed in 10mL of ether, dropwise added into the original reaction system in an ice water bath, slowly heated to room temperature, stirred overnight, quenched with water, an organic phase was extracted with ether, the obtained organic phase was concentrated, freezed for cyclic deoxygenation, 5mL of concentrated hydrochloric acid was added in the nitrogen atmosphere to carry out the reaction for 5h, the completion of reaction was tracked by TLC, an aqueous NaHCO₃ solution was subsequently added for neutralization, quenched with water, the organic phase was extracted with ether, subjected to drying with anhydrous MgSO₄, filtering, concentrating, and performing column chromatography, a ligand L₃ was obtained with a yield of 28%. C₂₄H₂₅O₃P (392.43) was subjected to the elemental analysis and test: the theoretical calculation values were as follows: C, 73.46; H, 6.42; the test values were as follows: C, 73.15; H, 6.78.

The ligand L₃ (0.78g, 2mmol) was dissolved in tetrahydrofuran under a nitrogen gas atmosphere, excess NaH (0.072g, 3mmol) was added, stirred at room temperature for 10h, filtered to remove NaH, a tetrahydrofuran solution of (THF)₂ZrCl₄ (0.38g, 1mmol) was dropwise added at -78°C, the reaction was carried out overnight at room temperature, the solvent was extracted completely, dichloromethane (30mL) was added for dissolution, the solution was filtered to remove a filter cake, the filtrate was concentrated, heptane was added for recrystallization, a complex 24 was prepared with a yield of 77%. C₄₈H₄₈Cl₂O₆P₂Zr (944.98) was subjected to the elemental analysis and test: the theoretical calculation values were as follows: C, 61.01; H, 5.12; the test values were as follows: C, 61.25; H, 5.32.

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylalumoxane (3.3mL,5mmol) and 4.7mg (5µmol) of complex 24 were added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Comparative Example 1

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (6.5mL, 10mmol) was added, 8.3mg (10µmol) of complex A was added (the complex A was synthesized according to the reference literature Inorg. Chem. 2006, 45, pp. 511-513). An ethylene pressure of 1.0atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

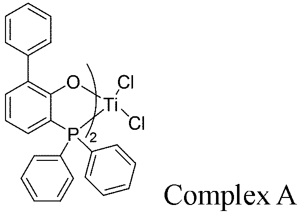

### Comparative Example 2

100mL glass polymerization kettle equipped with a mechanical stirrer was continuously dried at 130°C for 6 hours, vacuumized while the kettle was still hot, the air in said kettle was replaced with N₂ gas for 3 times, 500mL of toluene was injected into the polymerization kettle, methylaluminoxane (6.5mL, 10mmol) and 0.5g of norbornene were added, 3.3mg (4.0µmol) of complex A was added. An ethylene pressure of 1.0atm was maintained at the temperature of 70°C, the materials were vigorously stirred and subjected to the reaction for 10min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

### Comparative Example 3

1L stainless steel polymerization kettle equipped with a mechanical stirrer was continuously dried at 130°C for 6 hours, vacuumized while the kettle was still hot, the air in said kettle was replaced with N₂ gas for 3 times, 500mL of hexane was injected into the polymerization kettle, methylaluminoxane (6.5mL, 10mmol) was added, 8.3mg (10µmol) of complex B was added (the complex B was synthesized according to the reference literature Inorg. Chem. 2006, 45, pp. 511-513). An ethylene pressure of 1.0atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution and polymerization activity of the prepared polymer were as shown in Table 1.

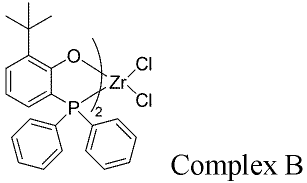

**Table 1**

| Examples | Complexes | Polymerization activity (g/mol·h) | *M*_{w}×10⁻⁴ | *M*_{w}/*M*ₙ | Content of comonomer (mol%) |
|---|---|---|---|---|---|
| Example 1 | Complex 2 | 5.12×10⁵ | 8.9 | 2.0 | - |
| Example 2 | Complex 2 | 1.61×10⁷ | 38.5 | 2.2 | - |
| Example 3 | Complex 2 | 2.33×10⁶ | 8.7 | 2.3 | - |
| Example 4 | Complex 2 | 1.02×10⁶ | 5.3 | 2.1 | - |
| Example 5 | Complex 2 | 1.01×10⁶ | 6.6 | 2.0 | 3.8 |
| Example 6 | Complex 2 | 1.56×10⁶ | 7.8 | 2.1 | 4.5 |
| Example 7 | Complex 2 | 2.01×10⁵ | 3.9 | 1.3 | 10.6 |
| Example 8 | Complex 2 | 3.12×10⁵ | 4.1 | 1.2 | 15.1 |
| Example 9 | Complex 2 | 4.13×10⁵ | 5.0 | 1.2 | 21.7 |
| Example 10 | Complex 21 | 4.34×10⁷ | 6.5 | 2.3 | - |
| Example 11 | Complex 36 | 2.41×10⁶ | 41.2 | 4.5 | - |
| Example 12 | Complex 14 | 8.74×10⁵ | 7.1 | 1.4 | - |
| Example 13 | Complex 30 | 5.63×10⁷ | 7.3 | 2.5 | - |
| Example 14 | Complex 30 | 1.88×10⁷ | 5.2 | 2.1 | - |
| Example 15 | Complex 24 | 4.57×10⁷ | 10.6 | 2.2 | - |
| Comparative Example 1 | Complex A | 1.01×10⁵ | 2.1 | 2.5 | - |
| Comparative Example 2 | Complex A | 1.12×10⁵ | 3.8 | 2.2 | 14.3 |
| Comparative Example 3 | Complex B | 7.76×10⁶ | 2.2 | 2.7 | - |

As can be seen from the data in Table 1, when the tetrahydronaphthol-phosphine pre-transition metal complex of the invention is used as the main catalyst, the catalyst exhibits a higher homopolymerization/copolymerization activity, the prepared polymer has a significantly higher molecular weight and a narrower molecular weight distribution, under the similar polymerization conditions. In particular, the comparison results between Examples 1-4, 12 and Comparative Example 1 indicate when each of the coordination metals in use is Ti, the complex of the invention has a significantly higher homopolymerization activity, the prepared olefin polymer has an obviously higher molecular weight and a narrower molecular weight distribution; the comparison results between Examples 10, 13-15 and Comparative Example 3 demonstrate when each of the coordination metals in use is Zr, the complexes of the present invention have a significantly higher homopolymerization activity, the prepared olefin polymer has an obviously higher molecular weight and a narrower molecular weight distribution; when Examples 5-9 are compared with Comparative Example 2, it can be seen that the complexes prepared according to the invention have a significantly higher olefin copolymerization activity, the resulting polymer has a higher molecular weight and a narrower molecular weight distribution.

The above content describes in detail the preferred embodiments of the present invention, but the present invention is not limited thereto. A variety of simple modifications can be made in regard to the technical solutions of the present invention within the scope of the technical concept of the invention, including a combination of individual technical features in any other suitable manner, such simple modifications and combinations thereof shall also be regarded as the content disclosed by the present invention, each of them falls into the protection scope of the present invention.

## Claims

1. A tetrahydronaphthol-phosphine pre-transition metal complex, is **characterized in that** the structural formula of the tetrahydronaphthol-phosphine pre-transition metal complex is shown as formula (I), 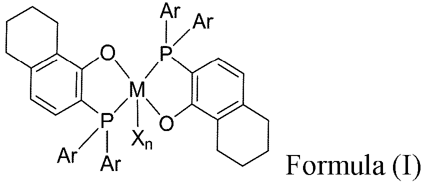 wherein M is selected from group IVB metals; Ar is selected from substituted or unsubstituted C6-C20 aryl groups; X is selected from halogen or C1-C10 hydrocarbyl groups, and n is 1 or 2.

2. The tetrahydronaphthol-phosphine pre-transition metal complex according to claim 1, wherein the structural formula of the tetrahydronaphthol-phosphine pre-transition metal complex is shown as formula (II), 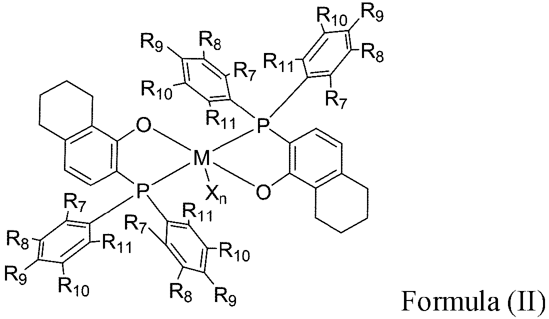 wherein R₇-R₁₁ are each independently selected from hydrogen, halogen, hydroxyl groups, and substituted or unsubstituted C1-C20 hydrocarbyl groups.

3. The tetrahydronaphthol-phosphine pre-transition metal complex according to claim 2, wherein R₇-R₁₁ are each independently selected from hydrogen, halogen, hydroxyl groups, substituted or unsubstituted C1-C10 hydrocarbyl groups, and substituted or unsubstituted C6-C15 aryl groups.

4. The tetrahydronaphthol-phosphine pre-transition metal complex according to any one of claims 1-3, wherein M is Ti, Zr or Hf.

5. The tetrahydronaphthol-phosphine pre-transition metal complex according to any one of claims 1-4, wherein X is halogen or C1-C8 hydrocarbyl groups.

6. The tetrahydronaphthyrol-phosphine pre-transition metal complex according to any one of claims 1-5, wherein the complex is selected from the group consisting of the following complexes:
Complex 1: a complex represented by formula (II), wherein M is Ti, R₇-R₁₁ are each H, X is Cl, and n=1;
Complex 2: a complex represented by formula (II), wherein M is Ti, R₇-R₁₁ are each H, X is Cl, and n=2;
Complex 3: a complex represented by formula (II), wherein M is Ti, R₇-R₁₁ are each H, X is methyl, and n=2;
Complex 4: a complex represented by formula (II), wherein M is Ti, R₇-R₁₁ are each H, X is -CH₂C₆H₅, and n=2;
Complex 5: a complex represented by formula (II), wherein M is Ti, R₈-R₁₁ are each H, R₇ is methoxy, X is Cl, n=1;
Complex 6: a complex represented by formula (II), wherein M is Ti, R₈-R₁₁ are each H, R₇ is methoxy, X is Cl, n=2;
Complex 7: a complex represented by formula (II), wherein M is Ti, R₈-R₁₁ are each H, R₇ is methoxy, X is methyl, n=2;
Complex 8: a complex represented by formula (II), wherein M is Ti, R₈-R₁₁ are each H, R₇ is methoxy, X is -CH₂C₆H₅, and n=2;
Complex 9: a complex represented by formula (II), wherein M is Ti, R₇, R₈, R₁₀ and R₁₁ are each H, R₉ is methoxy, X is Cl, n=1;
Complex 10: a complex represented by formula (II), wherein M is Ti, R₇, R₈, R₁₀ and R₁₁ are each H, R₉ is methoxy, X is Cl, n=2;
Complex 11: a complex represented by formula (II), wherein M is Ti, R₇, R₈, R₁₀ and R₁₁ are each H, R₉ is methoxy, X is methyl, n=2;
Complex 12: a complex represented by formula (II), wherein M is Ti, R₇, R₈, R₁₀ and R₁₁ are each H, R₉ is methoxy, X is -CH₂C₆H₅, n=2;
Complex 13: a complex represented by formula (II), wherein M is Ti, R₇, R₉ and R₁₁ are each H, R₈ and R₁₀ are each -CF₃, X is Cl, n=1;
Compound 14: a complex represented by formula (II), wherein M is Ti, R₇, R₉ and R₁₁ are each H, R₈ and R₁₀ are each -CF₃, X is Cl, n=2;
Complex 15: a complex represented by formula (II), wherein M is Ti, R₇, R₉ and R₁₁ are each H, R₈ and R₁₀ are each -CF₃, X is methyl, n=2;
Compound 16: a complex represented by formula (II), wherein M is Ti, R₇, R₉ and R₁₁ are each H, R₈ and R₁₀ are each -CF₃, X is -CH₂C₆H₅, n=2;
Complex 17: a complex represented by formula (II), wherein M is Ti, R₇, R₉ and R₁₁ are each H, R₈ and R₁₀ are each methyl, X is Cl, n=1;
Complex 18: a complex represented by formula (II), wherein M is Ti, R₇, R₉ and R₁₁ are each H, R₈ and R₁₀ are each methyl, X is Cl, n=2;
Complex 19: a complex represented by formula (II), wherein M is Ti, R₇, R₉ and R₁₁ are each H, R₈ and R₁₀ are each methyl, X is methyl, n=2;
Complex 20: a complex represented by formula (II), wherein M is Ti, R₇, R₉ and R₁₁ are each H, R₈ and R₁₀ are each methyl, X is -CH₂C₆H₅, n=2;
Complex 21: a complex represented by formula (II), wherein M is Zr, R₇-R₁₁ are each H, X is Cl, and n=2;
Complex 22: a complex represented by formula (II), wherein M is Zr, R₇-R₁₁ are each H, X is methyl, n=2;
Complex 23: a complex represented by formula (II), wherein M is Zr, R₇-R₁₁ are each H, X is -CH₂C₆H₅, and n=2;
Complex 24: a complex represented by formula (II), wherein M is Zr, R₈-R₁₁ are each H, R₇ is methoxy, X is Cl, and n=2;
Complex 25: a complex represented by formula (II), wherein M is Zr, R₈-R₁₁ are each H, R₇ is methoxy, X is methyl, n=2;
Complex 26: a complex represented by formula (II), wherein M is Zr, R₈-R₁₁ are each H, R₇ is methoxy, X is -CH₂C₆H₅, and n=2;
Complex 27: a complex represented by formula (II), wherein M is Zr, R₇, R₈, R₁₀ and R₁₁ are each H, R₉ is methoxy, X is Cl, n=2;
Compound 28: a complex represented by formula (II), wherein M is Zr, R₇, R₈, R₁₀ and R₁₁ are each H, R₉ is methoxy, X is methyl, n=2;
Complex 29: a complex represented by formula (II), wherein M is Zr, R₇, R₈, R₁₀ and R₁₁ are each H, R₉ is methoxy, X is -CH₂C₆H₅, n=2;
Complex 30: a complex represented by formula (II), wherein M is Zr, R₇, R₉ and R₁₁ are each H, R₈ and R₁₀ are each -CF₃, X is Cl, n=2;
Compound 31: a complex represented by formula (II), wherein M is Zr, R₇, R₉ and R₁₁ are each H, R₈ and R₁₀ are each -CF₃, X is methyl, n=2;
Complex 32: a complex represented by formula (II), wherein M is Zr, R₇, R₉ and R₁₁ are each H, R₈ and R₁₀ are each -CF₃, X is -CH₂C₆H₅, n=2;
Complex 33: a complex represented by formula (II), wherein M is Zr, R₇, R₉ and R₁₁ are each H, R₈ and R₁₀ are each methyl, X is Cl, n=2;
Complex 34: a complex represented by formula (II), wherein M is Zr, R₇, R₉ and R₁₁ are each H, R₈ and R₁₀ are each methyl, X is methyl, n=2;
Complex 35: a complex represented by formula (II), wherein M is Zr, R₇, R₉ and R₁₁ are each H, R₈ and R₁₀ are each methyl, X is -CH₂C₆H₅, n=2;
Complex 36: a complex represented by formula (II), wherein M is Hf, R₇-R₁₁ are each H, X is Cl, and n=2;
Complex 37: a complex represented by formula (II), wherein M is Hf, R₇-R₁₁ are each H, X is methyl, and n=2;
Complex 38: a complex represented by formula (II), wherein M is Hf, R₇-R₁₁ are each H, X is -CH₂C₆H₅, and n=2;
Complex 39: a complex represented by formula (II), wherein M is Hf, R₈-R₁₁ are each H, R₇ is methoxy, X is Cl, and n=2;
Complex 40: a complex represented by formula (II), wherein M is Hf, R₈-R₁₁ are each H, R₇ is methoxy, X is methyl, n=2;
Complex 41: a complex represented by formula (II), wherein M is Hf, R₈-R₁₁ are each H, R₇ is methoxy, X is -CH₂C₆H₅, and n=2;
Complex 42: a complex represented by formula (II), wherein M is Hf, R₇, R₈, R₁₀ and R₁₁ are each H, R₉ is methoxy, X is Cl, n=2;
Complex 43: a complex represented by formula (II), wherein M is Hf, R₇, R₈, R₁₀ and R₁₁ are each H, R₉ is methoxy, X is methyl, n=2;
Complex 44: a complex represented by formula (II), wherein M is Hf, R₇, R₈, R₁₀ and R₁₁ are each H, R₉ is methoxy, X is -CH₂C₆H₅, n=2;
Complex 45: a complex represented by formula (II), wherein M is Hf, R₇, R₉ and R₁₁ are H, R₈ and R₁₀ are each -CF₃, X is Cl, n=2;
Complex 46: a complex represented by formula (II), wherein M is Hf, R₇, R₉ and R₁₁ are H, R₈ and R₁₀ are each -CF₃, X is methyl, n=2;
Complex 47: a complex represented by formula (II), wherein M is Hf, R₇, R₉ and R₁₁ are H, R₈ and R₁₀ are each -CF₃, X is -CH₂C₆H₅, and n=2;
Complex 48: a complex represented by formula (II), wherein M is Hf, R₇, R₉ and R₁₁ are H, R₈ and R₁₀ are each methyl, X is Cl, n=2;
Complex 49: a complex represented by formula (II), wherein M is Hf, R₇, R₉ and R₁₁ are H, R₈ and R₁₀ are each methyl, X is methyl, n=2;
Compound 50: a complex represented by formula (II), wherein M is Hf, R₇, R₉ and R₁₁ are H, R₈ and R₁₀ are each methyl, X is -CH₂C₆H₅, and n=2.

7. A method for preparing the tetrahydronaphthol-phosphine pre-transition metal complex, is **characterized in that** the method comprises the following steps:
(1) Reacting a compound represented by formula (III) with a compound represented by formula (IV) to generate a ligand;
(2) Mixing the ligand with a hydrogen-extracting agent and carrying out the reaction, then removing the hydrogen-extracting agent, and subjecting the obtained product to the reaction with an M metal compound; 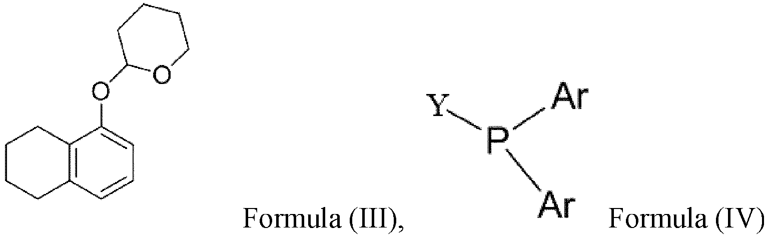
wherein Ar in formula (IV) is selected from the substituted or unsubstituted C6-C20 aryl groups, and Y is halogen;
the metal M in the M metal compound is selected from group IVB metals.

8. The method according to claim 7, wherein the hydrogen-extracting agent is at least one selected from the group consisting of NaH, KH, n-butyl lithium and methyl lithium.

9. The method according to claim 7, wherein the M metal compound is at least one selected from the group consisting of titanium tetrachloride, bis(tetrahydrofuran)titanium tetrachloride, tri(tetrahydrofuran)titanium trichloride, zirconium tetrachloride, bis(tetrahydrofuran)zirconium tetrachloride, hafnium tetrachloride and bis(tetrahydrofuran)hafnium tetrachloride.

10. An olefin polymerization catalyst comprising a main catalyst and a co-catalyst, wherein the main catalyst is the tetrahydronaphthol-phosphine pre-transition metal complex according to any one of claims 1-6.

11. The olefin polymerization catalyst according to claim 10, wherein the co-catalyst is an organo-aluminum compound and/or an organo-boron compound.

12. The olefin polymerization catalyst according to claim 11, wherein the organo-aluminum compound is at least one of alkylaluminoxane and an organo-aluminum compound represented by the general formula AlLₙZ₃₋ₙ, wherein L is selected from hydrogen, C1-C20 hydrocarbyl groups and C1-C20 alkoxy, Z is selected from halogen, 0<n≤3, and n is an integer.

13. The olefin polymerization catalyst according to claim 11, wherein the organo-boron compound is aryl boron and/or organo-borate.

14. An olefin polymerization method, its **characterized in that** the method comprises carrying out the olefin polymerization reaction in the presence of said olefin polymerization catalyst according to any one of claims 10-13.
